# EUROPEAN PATENT SPECIFICATION

(11) **EP 3 390 537 B1**
(45) Date of publication and mention of the grant of the patent: **21.07.2021**
(21) Application number: 16823196.7
(22) Date of filing: 15.12.2016
(51) Int. Cl.: C08G 63/183, C08L 67/02, C08L 77/00, C08K 5/5313, C08K 7/14, C08L 23/08, C08K 3/013, C08K 5/00, C08L 101/00

(54) **A THERMOPLASTIC POLYMER COMPOSITION, AN ARTICLE MADE THEREOF AND A PROCESS FOR PREPARING THE SAME**
THERMOPLASTISCHE POLYMERZUSAMMENSETZUNG, ARTIKEL DARAUS UND VERFAHREN ZUR HERSTELLUNG DAVON
COMPOSITION POLYMERE THERMOPLASTIQUE, ARTICLE FAIT A PARTIR DE CELLE-CI ET SON PROCEDE DE PREPARATION

(30) Priority: 15.12.2015 WO PCT/EP2015/199990
(43) Date of publication of application: 24.10.2018
(73) Proprietor: DSM IP Assets B.V., 6411 TE Heerlen (NL)
(72) Inventor: VAN DER BURGT, Frank Peter Theodorus Johannes, 6100 AA Echt (NL); ESAKIMUTHU, Sivasubramonian, 6100 AA Echt (NL)
(74) Representative: DSM Intellectual Property
(86) International application number: PCT/EP2016/081160
(87) International publication number: WO 2017/102930

(56) References cited:
- WO-A1-2015/005111
- WO-A1-2017/033135
- US-A1- 2013 289 178
- US-A1- 2014 206 800
- US-A1- 2015 175 804
- DATABASE WPI Week 201455 Thomson Scientific, London, GB; AN 2014-N99221 XP002756891, -& WO 2014/115475 A1 (MITSUBISHI ENG-PLASTICS CORP) 31 July 2014 (2014-07-31)

## Description

The present invention relates to a thermoplastic polymer composition comprising a thermoplastic polymer and a Laser Direct Structuring (LDS) additive. The composition further comprises an impact modifier, and optionally also a reinforcing agent. The present invention further concerns an article prepared from the thermoplastic polymer composition, and an article made by an LDS process and a process for preparing the same.

Electrical components may be provided as a molded interconnect device (MID), i.e. an injection-molded thermoplastic part with integrated electronic circuit traces. MID technology combines a plastic substrate with a circuitry into a single part through selective metallization. Molded interconnect devices (MID) with the desired conducting patterns can be manufactured by MID technology using different methods, e.g. masking methods, two-component injection molding with subsequent electroplating, laser direct structuring, coating the back of a film, or through hot stamping. In contrast to conventional circuit boards made of fiberglass-reinforced plastic or the like, MID components manufactured in this way are three-dimensional molded parts having an integrated printed conductor layout and possibly further electronic or electromechanical components mounted thereupon or integrated therein. The use of MID components of this type, even if the components have only printed conductors and are used to replace conventional wiring inside an electrical or electronic device, saves space, allowing the relevant device to be made smaller, and lowers the manufacturing costs by reducing the number of assembly and contacting steps.

It is becoming increasingly popular to form MIDs using a laser direct structuring (LDS) process. The use of high temperature thermoplastics and their structured metallization opens a new dimension of circuit carrier design to the electronics industry and integration with further electronic or electromechanical components in surface mount technology (SMT) processes involving high temperature conditions. Laser Direct Structuring (LDS) is a process that enables an injection molded article to be selectively plated with metal to form discrete conductive circuit paths. The LDS process uses a thermoplastic material, doped with a metal-based additive (the LDS additive) which can be activated by means of laser light. The basic part is generally single-component injection molded, with practically no restrictions in terms of 3D design freedom. First, a plastic article is injection molded using a polymer molding compound formulated specifically for this process. A laser then writes the course of the later circuit trace on the plastic. In the LDS process a computer-controlled laser beam travels over the MID to activate the plastic surface at locations where the conductive path is to be situated. In this manner, the surface of the article is activated with the laser in the desired pattern, only in the areas traced with the laser. Where the laser beam hits the plastic substrate, the plastic forms a micro-rough track, while the metal particles released from the metal based LDS additive on this track form the nuclei for the subsequent metallization. The article is then subjected to an electroless plating step in a metal plating bath with a metal such as copper, nickel or gold. Successively layers of copper, nickel and gold finish can be raised in this way. The resulting circuit paths conform exactly to the laser pattern.

With a laser direct structuring process, it is possible to obtain small conductive path widths (such as of 150 microns or less). In addition, the spacing between the conductive paths may also be small. As a result, MIDs formed from this process save space and weight in the end-use applications. One further advantage of the LDS process is the ability to have a circuit path following the contour of the injection molded article, thus applying a true 3D circuit path. By integrating the circuit directly onto the plastic article, the designer now has freedoms previously unavailable. These design freedoms allow article consolidation, weight reduction, miniaturization, reduced assembly time, improved reliability and overall system cost reduction. Another advantage of laser direct structuring is its flexibility. If the design of the circuit is changed, it is simply a matter of reprogramming the computer that controls the laser.

Key markets and applications for the Laser Direct Structuring process include electronic devices for medical, automotive, aerospace, military, RF antennas, sensors, as well as security housings and connectors for electronic devices.

The current additives for LDS materials are usually spinel based metal oxide (such as copper chromium oxide), metal compounds, such as copper hydroxide and copper phosphate, and organic metal complexes such as palladium complexes or copper complexes.

US 20040241422 A1 discloses a method to produce conductive tracks disposed on an electrically non-conductive support material by depositing a metallized layer on metal nuclei produced by using electromagnetic radiation to break up electrically non-conductive metal compounds dispersed in the support material, and a method for producing them. The electrically non-conductive metal compounds are insoluble spinel-based inorganic oxides which are thermally stable and are stable in acidic or alkaline metallization baths, and which are higher oxides which are thermally stable and are stable in acidic or alkaline metallization baths, and which are higher oxides with a spinel structure, and which remain unchanged in non-irradiated areas. The spinel based inorganic oxides used are heat resistant and remain stable after being subjected to soldering temperatures. The conductor tracks are reliably and easily produced and adhere strongly to the support.

US 2009/0292051 A1 describes laser direct structuring materials with a high dielectric constant to be used in e.g. antennas. The compositions described in US 2009/0292051 A1 comprise a thermoplastic resin, an LDS additive and filler. As reinforcement fillers glass fibers and boron nitride are mentioned amongst others. As ceramic filler Ti02 is used.

WO2015/005111 A1 discloses a resin composition comprising a thermoplastic resin and a laser direct structuring additive containing at least two kinds of metals and also containing a conductive oxide having a resistivity of 5x10 omega-cm or less. The thermoplastic resin comprises resin components including 40 to 100% by weight of a polycarbonate resin and 0 to 60% by weight of a styrene-based resin, a polyamide resin, or a thermoplastic polyester resin. The thermoplastic resin may also optionally contain impact modifiers and/or flame retardants.

US2012/0279764 A1 discloses a thermoplastic composition that is capable of being used in a laser direct structuring process to provide enhanced plating performance and good mechanical properties. The compositions of this patent application include a thermoplastic base resin, a laser direct structuring additive and a white pigment. The pigments comprise materials selected from the group of TiO2 including anastase, rutile, coated and uncoated, ZnO, BaSO4, CaCO3 and BaTiO3, or a combination of at least two thereof. The LDS additive is a heavy metal mixture oxide spinel, such as copper chromium oxide spine; a copper salt, such as copper hydroxide, copper phosphate, copper sulfate or cuprous thiocyanate; or a combination. These materials were claimed to exhibit a synergistic effect with the LDS additive as well as to improve the plating performance of the LDS composition.

However, there are some limitations based on the LDS additives. For organic metal complexes, usually relatively higher loadings are required to obtain sufficiently dense nucleation for rapid metallization when activated by laser radiation. Another problem is that LDS additives give rise to embrittlement of fiber reinforced compositions, affecting elongation at break and impact performance. In particular the spinel based metal oxides adversely affect the mechanical properties of fiber reinforced materials, resulting in lowering the notched impact and tensile elongation. It has also been observed by the inventors that additives like TiO2, which are claimed to have a synergistic effect on the LDS additive as well as on the plating performance of the LDS composition, can have a detrimental effect on the elongation at break and impact performance of fiber reinforced polymer compositions.

On the other hand, non-reinforced thermoplastic molding compositions used for electronic components, are generally more brittle than corresponding reinforced thermoplastic molding compositions. To improve the mechanical properties of reinforced as well as non-reinforced thermoplastic molding compositions, often use is made of impact modifiers. Compositions comprising an impact modifier typically have a larger elongation at break and better impact performance than the corresponding non-modified thermoplastic molding compositions.

An impact modified thermoplastic composition is described, for example, in US-2014031476-A. The composition of US-2014031476-A comprises nylon 6,6 resin, a polymer performance modifier and a silicone based additive, wherein the silicone based additive comprises an ultrahigh molecular weight siloxane polymer that is unfunctionalized and non-reactive with the polyamide resin, and wherein the thermoplastic composition has an impact strength value which is greater than that of the combination of the polyamide resin and the polymer performance modifier or the combination of the polyamide resin and the silicone based additive.

However, it was experienced by the inventors that although addition of impact modifiers to LDS based thermoplastic polymer compositions resulted in a better performance in terms of elongation at break and impact, it had a very negative effect on the plating performance of the LDS composition.

Therefore, there is a need for materials with good or even improved LDS performance, while retaining reasonable mechanical properties.

An object of the present invention is to provide a thermoplastic polymer composition capable of being used in a laser direct structuring process with good LDS properties and retention of good mechanical properties, in particular retention of elongation at break and impact.

According to the invention this object is achieved with the composition having by the features of claim 1.

The thermoplastic composition of the present invention comprises a thermoplastic polymer (component A), an impact modifier (component B) and a Laser Direct Structuring additive (component C). The composition also comprises a halogen free flame retardant (component D).

In a preferred embodiment, the composition further comprises a reinforcing agent (component E).

In the composition according to the invention, the thermoplastic resin (A) comprises a thermoplastic polyamide or a thermoplastic polyester, and the halogen free flame retardant (D) comprises a melamine condensation product, a salt of a polyphosphate and melamine or a melamine condensation product, or a salt of an organic phosphinic acid or diphosphinic acid and a metal, melamine or a melamine condensation product, or any mixture thereof.

The effect of the composition according to the invention is a synergistic effect, resulting in a good LDS performance, while at the same time the mechanical properties of the composition are retained at a good level. One of the aspects of the LDS process with the composition according to the invention is that under identical plating conditions a thicker plating metal layer is obtained or a certain layer thickness is achieved in a shorter time and/or under less energy demanding conditions in comparison with corresponding impact modified compositions not comprising the halogen free flame retardant.

The thermoplastic polymer (A) comprises a thermoplastic polyamide or a thermoplastic polyester, more preferably a thermoplastic polyamide.

The thermoplastic polyamide suitably comprises a semi-aromatic polyamide or an aliphatic polyamide, or a mixture of at least two thereof.

The aliphatic polyamide is typically a semi-crystalline polyamide. The semi-aromatic polyamide can be either a semi-crystalline semi-aromatic polyamide or an amorphous semi-aromatic polyamide, or a combination thereof.

With the term semi-crystalline polyamide is herein understood a polyamide that has crystalline domains as demonstrated by the presence of a melting peak with a melting enthalpy of at least 5J/g. With the term amorphous polyamide is herein understood a polyamide that has no crystalline domains or essentially so, as demonstrated by absence of a melting peak or the presence of a melting peak with a melting enthalpy of less than 5J/g. Herein the melting enthalpy is expressed relative to the weight of the polyamide.

With a semi-aromatic polyamide is herein understood a polyamide derived from monomers comprising at least one monomer containing an aromatic group and at least one aliphatic or cycloaliphatic monomer.

The semi-crystalline semi-aromatic polyamide suitably has a melting temperature around 270°C, or above. Preferably the melting temperature (Tm) is at least 280°C, more preferably in the range of 280 - 350 °C, or even better 300-340 °C. Thus the composition will be better capable to withstand more severe SMT conditions. A higher melting temperature can generally be achieved by using a higher content in terephthalic acid and/or shorter chain diamines in the polyamide. The person skilled in the art of making polyamide molding compositions will be capable of making and selecting such polyamides.

Suitably, the semi-crystalline semi-aromatic polyamide has a melting enthalpy of at least 15 J/g, preferably at least 25 J/g, and more preferably at least 35 J/g. Herein the melting enthalpy is expressed relative to the weight of the semi-crystalline semi-aromatic polyamide.

With the term melting temperature is herein understood the temperature, measured by the DSC method according to ISO-11357-1/3, 2011, on pre-dried samples in an N2 atmosphere with heating and cooling rate of 10°C/min. Herein Tm has been calculated from the peak value of the highest melting peak in the second heating cycle. With the term melting enthalpy is herein understood the melting enthalpy measured by the DSC method according to ISO-11357-1/3, 2011, on pre-dried samples in an N2 atmosphere with heating and cooling rate of 10°C/min. Herein the melting enthalpy is measured from the integrated surface below the melting peak(s) in the second heating cycle. With the term glass transition temperature (Tg) is herein understood the temperature, measured by the DSC method according to ISO-11357-1/2, 2011, on pre-dried samples in an N2 atmosphere with heating and cooling rate of 10°C/min. Herein Tg has been calculated from the value at the peak of the first derivative (with respect of time) of the parent thermal curve corresponding with the inflection point of the parent thermal curve for the second heating cycle.

Suitably, the semi-aromatic polyamide used in the present invention is derived from about 10 to about 75 mole % of the monomers containing an aromatic group. Accordingly, preferably about 25 to about 90 mole % of the remaining monomers are aliphatic and/or cycloaliphatic monomers.

Examples of suitable monomers containing aromatic groups are terephthalic acid and its derivatives, isophthalic acid and its derivatives, naphthalene dicarboxylic acid and its derivatives, C6-C20 aromatic diamines, p-xylylenediamine and m-xylylenediamine.

Preferably, the composition according to the invention comprises a semi-crystalline semi-aromatic polyamide, more particular a semi-crystalline semi-aromatic polyamide derived from monomers containing terephthalic acid and its derivatives.

The semi-crystalline semi-aromatic polyamide can further contain one or more different monomers, either aromatic, aliphatic or cycloaliphatic. Examples of aliphatic or cycloaliphatic compounds from which the semi-aromatic polyamide may further be derived include aliphatic and cycloaliphatic dicarboxylic acids and its derivatives, aliphatic C4-C20 alkylenediamines and/or C6-C20 alicyclic diamines, and amino acids and lactams. Suitable aliphatic dicarboxylic acids are, for example, adipic acid, sebacic acid, azelaic acid and/or dodecanedioic acid. Suitable diamines include butanediamine, hexamethylenediamine; 2 methylpentamethylenediamine; 2-methyloctamethylenediamine; trimethylhexamethylene-diamine; 1,8-diaminooctane, 1,9-diaminononane; 1,10-diaminodecane and 1,12-diaminododecane. Examples of suitable lactams and amino acids are 11-aminododecanoic acid, caprolactam, and laurolactam.

Examples of suitable semi-crystalline semi-aromatic polyamides include poly(m-xylylene adipamide) (polyamide MXD,6), poly(dodecamethylene terephthalamide) (polyamide 12,T), poly(decamethylene terephthalamide) (polyamide 10,T), poly(nonamethylene terephthalamide) (polyamide 9,T), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), hexamethylene adipamide/hexamethylene terephthalamide/hexamethylene isophthalamide copolyamide (polyamide 6,6/6,T/6,I), poly(caprolactam-hexamethylene terephthalamide) (polyamide 6/6,T), hexamethylene terephthalamide/hexamethylene isophthalamide (6,T/6,I) copolymer, polyamide 10,T/10,12, polyamide 10T/10,10 and the like.

Preferably, the semi-crystalline semi-aromatic polyamide is a polyphthalamide, represented by the notation PA-XT or PA-XT/YT, wherein the polyamide is built from repeat units derived from terephthalic acid (T) and one or more linear aliphatic diamines. Suitable example thereof are PA-8T, PA-9T, PA-10T, PA-11T, PA5T/6T, PA4T/6T, and any copolymers thereof. Preferably, the polyphthalamide is selected from the group consisting of PA-9T, PA-10T and PA-11T, or any combination thereof.

In a preferred embodiment of the invention, the semi-crystalline semi-aromatic polyamide has a number average molecular weight (Mn) of more than 5,000 g/mol, preferably in the range of 7,500 - 50,000 g/mol, more preferably 10,000 - 25,000 g/mol. This has the advantage that the composition has a good balance in mechanical properties and flow properties.

Examples of suitable amorphous semi-aromatic polyamides are PA-XI, wherein X is an aliphatic diamine, such as PA-6I, PA-8I; amorphous copolyamides of PA-6I or PA-8I, such as PA-6I/6T or PA-8I/8T (for example PA-6I/6T 70/30); Preferably, the amorphous semi-aromatic polyamide comprises, or consists of amorphous PA-6I/6T.

The aliphatic polyamide may be derived from aliphatic and/or alicyclic monomers such as one or more of adipic acid, sebacic acid, azelaic acid, dodecanedioic acid, or their derivatives and the like, aliphatic C4-C20 alkylenediamines, alicyclic diamines, lactams, and amino acids. Suitable diamines include bis(p-aminocyclohexyl)methane; butanediamine, hexamethylenediamine; 2-methylpentamethylenediamine; 2-methyloctamethylenediamine; trimethylhexamethylenediamine; 1,8-diaminooctane; 1,9-diaminononane; 1,10-diaminodecane; 1,12-diaminododecane. Suitable lactams or amino acids include 11-aminododecanoic acid, caprolactam, and laurolactam.

Suitable aliphatic polyamides include for example polyamide 6; polyamide 6,6; polyamide 4,6; polyamide 4,8, polyamide 4,10, polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; and polyamide 6,13; and any mixtures and copolymers thereof.

Preferably, the aliphatic polyamide comprises polyamide 6,6, polyamide 4,6, or polyamide 4,8 or polyamide 4,10, polyamide -4,12, polyamide 6,10 or PA-6,12 or any mixture or copolymer thereof. More preferably, the aliphatic polyamide comprises, or consists of PA-410, PA-412, PA-610 or PA-612, or any combination thereof.

In another embodiment, the composition comprises a thermoplastic polyester. Preferably, the thermoplastic polyester is a semi-crystalline polyester selected from polyethylene terephthalate (PET), polytrimethylene terephthalate (PTT), polybutyleentereftalaat (PBT), polycyclohexylenedimethylene terephthalate (PCT), polyethylene naphthalate (PEN) poly(trimethylene naphthalate) (PTN) and poly(butylene naphthalate) (PBN).

The thermoplastic polymer (A) is suitably present in an amount of 30 - 80 wt.%, relative to the total weight of the composition. For example, the amount is in the range of 40 - 70 wt.%, more particular in the range of 50-60 wt.%, relative to the total weight of the composition.

The thermoplastic polymer composition according to the invention comprises an impact modifier (B).

Suitably, the impact modifier (B) is a polyolefine based polymer, a polyacrylic based polymer, a silicon based polymer or a polystyrene based polymer, or any copolymer thereof, and/or any combination thereof.

Suitable examples thereof include
- ethylene-butadiene copolymers, (e.g. available from Mitsui under the tradename Tafmer);
- ethyleneoxide copolymers, (e.g. available from DuPont under the tradename Fusabond);
- α-olefine copolymers (e.g. available from Polyram under the tradename Bondiram; available from Dow Chemicals under the tradename Paraloid);
- ethylene-propylene copolymers (e.g. available from Exxon under the tradename Exxelor);
- modified ethylene-propylene teropolymers, (e.g available from Addivant under the tradename Royaltuf);
- ethylene-acrylate copolymers, (e.g. available from Sumitomo under the tradename Igetabond; available from Arkema under the tradename Lotader);
- modified silicon resins, (e.g. available from Mitsubishi Rayon under the tradename Metablen; available from Wacker under the tradename Genioperl; available from Polymer Dynamix under the tradename Flexil);
- modified SBS rubbers, (e.g. available from Kraton under the tradename Kraton); or
- ethylene and methacrylic acid copolymer based ionomers, (e.g. available from DuPont under the tradename Surlyn).

The impact modifier (B) is present in an amount of 2.5 - 25 wt.%, relative to the total weight of the composition. For example, the amount is in the range of 5 - 20 wt.%, more particular in the range of 7.5 - 15 wt.%, relative to the total weight of the composition.

In addition to the thermoplastic thermoplastic polymer (A) and the impact modifier (B), the composition of the present invention comprises a laser direct structuring (LDS) additive (C).

For the LDS process, the goal is the production of a conductive path on a molded part through formation of a laser etched surface, and formation of a plated metal layer during a subsequent plating process. The conductive path can be formed by electroless plating process e.g. by applying a standard process, such as a copper plating process. Other electroless plating processes that may be used include, but are not limited to, gold plating, nickel plating, silver plating, zinc plating, tin plating or the like. In such a process laser radiation activates the polymer surface for the subsequent plating process. When an article comprising an LDS additive is exposed to the laser, its surface is activated. Without being bound by a theory, it seems that during activation with the laser metal complexes break down to metal nuclei. The laser draws a circuit pattern onto the part and leaves behind a roughened surface containing embedded metal particles. These particles act as nuclei for the plating process and enable adhesion of the metallization layer in metallization process. Plating rate and adhesion of the plated layer are key evaluation requirements.

The LDS additive is selected to enable the composition to be used in a laser direct structuring process. In an LDS process, an article made of the thermoplastic composition comprising the LDS additive is exposed to a laser beam to activate metal atoms from the LDS additive at the surface of the thermoplastic composition. As such, the LDS additive is selected such that, upon exposure to a laser beam, metal atoms are activated and exposed and in areas not exposed to the laser beam, no metal atoms are exposed. In addition, the LDS additive is selected such that, after being exposed to a laser beam, the etching area is capable of being plated to form conductive structure. As used herein "capable of being plated" refers to a material wherein a substantially uniform metal plating layer can be plated onto a laser-etched area and show a wide process window for laser parameters.

The current additives for LDS materials are usually spinel based metal oxide (such as copper chromium oxide), metal compounds, such as, copper hydroxide and copper phosphate, and organic metal complexes such as palladium complexes or copper complexes.

Examples of LDS additives useful in the present invention include, but are not limited to, metal compounds selected from metal oxides, metal salts and organic metal complexes, or a combination including at least one of the foregoing LDS additives. Examples of suitable metal oxides include spinel based metal oxides. Suitable metal salts include copper salt.
- Examples of suitable copper salts are copper hydroxide phosphate, copper phosphate, copper sulfate and cuprous thiocyanate.
- Spinel based metal oxides are generally based on heavy metal mixtures, such as in copper chromium oxide spinel, e.g. with formula CuCr2O4, nickel ferrite, e.g. spinel with formula NiFe2O4, zinc ferrite, e.g. spinel with formula ZnFe2O4, and nickel zinc ferrite, e.g. spinel with formula ZnₓNi₍₁₋ₓ₎Fe2O4 with x being a number between 0 and 1.
- Organic metal complexes suitable as LDS additive include palladium complexes or copper complexes.

In a preferred embodiment, the LDS additive (C) is a heavy metal mixture oxide spinel, more particular a copper chromium oxide spinel or a nickel zinc ferrite, or a combination thereof. Suitably, the nickel zinc ferrite is a spinel with formula ZnₓNi₍₁₋ₓ₎Fe2O4 with x being a number in the range of 0.25 - 0.75.

The LDS additive (C) is suitably present in amount in the range of 1.0 - 10 wt.%. More particular, the amount is in the range of 2 - 9.5 wt.%, or in the range of 3 - 9wt.%, or even 4 - 8.5 wt.%, relative to the total weight of the composition.

Next to the thermoplastic polymer (A), the impact modifier (B) and the laser direct structuring (LDS) additive (C), the composition of the present invention comprises a halogen free flame retardant (D).

The halogen free flame retardant suitably is a melamine condensation product, a salt of a polyphosphate, or a salt of a (di)phosphinic acid, or any combination thereof. Examples of melamine condensation products that can be used in the compositions according to the present invention are melam, melem, melon, and higher oligomers and any mixtures of two or more thereof.

Suitably, the salt of a polyphosphate is a metal salt, i.e. a metal polyphosphate, or a salt of a polyphosphate and melamine or a melamine condensation product. Examples of polyphosphate salts that can be used in the present invention include melamine polyphosphate, melem polyphosphate, melam polyphosphate and melon polyphosphate, and any mixtures of two or more of these.

The term (di)phosphinic acid is herein the short notation for "an organic phosphinic acid and/or a diphosphinic acid", in other words "an organic phosphinic acid, or a diphosphinic acid, or a combination thereof". Analogously, the term 'salt of a (di)phosphinic acid' is a short notation for 'salt of an organic phosphinic acid or diphosphinic acid, or a mixture thereof'. Herein the salt can be a salt of (di)phosphinic acid and a metal, melamine or a melamine condensation product, or a mixture thereof.

Suitably, the salt of a (di)phosphinic acid is a metal salt, i.e. a metal (di)phosphinate, or a salt of a (di)phosphinic acid and melamine or a melamine condensation product.

Suitable salts of (di)phosphinic acids that can be used in the composition according to the present invention are, for example, a phosphinate of the formula (I), a disphosphinate of the formula (II), 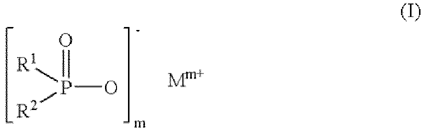 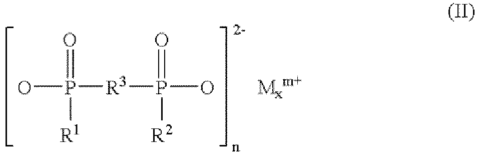 or polymers of these wherein R¹ and R² may be identical or different and are linear or branched C₁ - C₆ alkyl and/or aryl; R³ is linear or branched C₁ - C₁₀-alkylene, C₆ - C₁₀ - arylene, -alkylarylene or -arylalkylene; M is one or more of calcium ions, magnesium ions, aluminum ions and zinc ions, m is 2 or 3; n is 1 or 3; x is 1 or 2. R¹ and R² may be identical or different and are preferably methyl, ethyl, n-propyl, isopropyl, n-butyl, tert-butyl, n-pentyl and/or phenyl. R³ is preferably methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene or tert-butylnaphthylene, or phenylmethylene, phenylethylene, phenylpropylene or phenylbutylene. M is preferably chosen to be an aluminum ion or zinc ion. These compounds are disclosed in U.S. Pat. No. 6,255,371 which is hereby incorporated herein by reference.

In a preferred embodiment of the present invention, the halogen free flame retardant comprises or even consists of a metal salt of a (di)phosphinic acid. Preferred metal phosphinates are aluminum methylethylphosphinate and/or aluminum diethylphosphinate, more preferably aluminum diethylphosphinate. The advantage of the halogen free flame retardant comprising or consisting of metal salt of (di)phosphinic acid is that the plating rate of the LDS process is further enhanced resulting in thicker metal layers in the same time, or in achievement of a certain layer thickness in even shorter time or less energy demanding conditions. A further advantage is that the synergistic effect on the LDS properties is already achieved at a very low amount of the halogen free flame retardant.

The halogen free flame retardant (D) is suitably present in an amount in the range 1 - 15 wt.%, relative to the total weight of the composition. An amount less than 1 wt.% will have too little effect on the LDS properties. An amount more than 15 wt.% is possible, but will have limited additional effect on the LDS properties and limit the amount of reinforcing agent that can be included. Preferably, the amount of (C) is in the range of 2 - 12 wt.%, more preferably 3 - 10 wt.% relative to the total weight of the composition.

In a preferred embodiment of the invention the thermoplastic polymer composition comprises a reinforcing agent (E). Herein the reinforcing agent suitable comprises fibers (E.1), or fillers (E.2), or a combination thereof. More particular the fibers and fillers are preferably selected from materials consisting of inorganic material. Examples thereof include the following fibrous reinforcing materials: glass fibers, carbon fibers, and mixtures thereof. Examples of suitable inorganic fillers that the composition may comprise, include one or more of glass beads, glass flakes, kaolin, clay, talc, mica, wollastonite, calcium carbonate, silica and potassium titanate.

Fibers are herein understood to be materials having an aspect ratio L/D of at least 10. Suitably, the fibrous reinforcing agent has an L/D of at least 20. Fillers are herein understood to be materials having an aspect ratio L/D of less than 10. Suitably, the inorganic filler has an L/D of less than 5. In the aspect ratio L/D, L is the length of an individual fiber or particle and D is the diameter or width of an individual fiber or particle.

The reinforcing agent is suitably present in an amount in the range of 5-60 wt.%, relative to the total weight of the composition. Suitably, the amount of (E) is in a more restricted range of 10 - 50 wt.%, more particular 20 - 40 wt.%, relative to the total weight of the composition.

In a special embodiment of the present invention, the component (E) in the composition comprises 5 - 60 wt.% of a fibrous reinforcing agent (E.1) having an L/D of at least 20 and 0 - 55 wt.% of an inorganic filler (E.2) having an L/D of less than 5, wherein the combined amount of (E.1) and (E.2) is 60 wt.% or less, and wherein the weight percentages are relative to the total weight of the composition.

Preferably, component (E) comprises a fibrous reinforcing agent (E.1) and optionally an inorganic filler (E.2), wherein the weight ratio (E.1):(B.2) is in the range of 50:50 - 100:0.

Also preferably, the reinforcing agent comprises, or even consists of glass fibers. In a particular embodiment the composition comprises 5-60 wt.%, of glass fibers, more particular 10 - 50 wt.%, even more particular 20 - 40 wt.%, relative to the total weight of the composition.

Next to components (A) - (E), the composition according to the invention may optionally comprise one or more further components, together referred to as component (F). In this respect the composition suitably comprises at least one component selected from flame retardant synergists and auxiliary additives for thermoplastic molding compositions known by one skilled in the art suitable to improve other properties. Suitable auxiliary additives include acid scavengers, plasticizers, stabilizers (such as, for example, thermal stabilizers, oxidative stabilizers or antioxidants, light stabilizers, UV absorbers and chemical stabilizers), processing aids (such as, for example, mold release agents, nucleating agents, lubricants, blowing agents), pigments and colorants (such as, for example, carbon black, other pigments, dyes), and antistatic agents.

An example of a suitable flame retardant synergist is zinc borate. By the term "zinc borate" is meant one or more compounds having the formula (ZnO)ₓ(B₂O₃)_{Y}(H₂O)_{z}.

Suitably, the amount of component (F) is in the range of 0 - 30 wt.%. Correspondingly, the combined amount of (A), (B), (C), (D) and (E) suitably is at least 70 wt.%. Herein all the weight percentages (wt.%) are relative to the total weight of the composition.

The total amount of other components (F) can be, for example, about 1 - 2 wt.%, about 5 wt.%, about 10 wt.%, or about 20 wt.%. Preferably, the composition comprises at least one further component, and the amount of (F) is in the range of 0.5 - 10 wt.%, more preferably 1 - 5 wt.%. Correspondingly, (A), (B), (C), (D) and (E) are present in a combined amount in the range of 90 - 99.5 wt.%, respectively 95 - 99 wt.%.

In a particular embodiment, the components (A)-(E) in the composition according to the invention are suitably present in the following amounts:
(A) 30 - 80 wt.% of thermoplastic polymer;
(B) 2.5 - 25 wt.% of impact modifier;
(C) 1 - 10 wt.% of LDS additive;
(D) 1 - 15 wt.% of halogen free flame retardant; and
(E) 0 - 60 wt.% of reinforcing agent.
Herein the sum of (A), (B), (C), (D) and (E) is at most 100 wt.%.

More particular component (E) in this composition suitably comprises 5-60 wt.% of a fibrous reinforcing agent (E.1) having an L/D of at least 20 and 0 - 55 wt.% of an inorganic filler (E.2) having an L/D of less than 5.

In a preferred embodiment, the composition according to the invention consists of:
(A) 30 - 70 wt.% of thermoplastic polymer;
(B) 5 - 20 wt.% of impact modifier;
(C) 1 - 10 wt.% of LDS additive;
(D) 1 - 15 wt.% of halogen free flame retardant;
(E) 5 - 60 wt.% of reinforcing agent;
(F) 0 - 30 wt.% of one or more further components.
Herein the sum of (A), (B), (C), (D), (E) and (F) is 100 wt.%.

More particular component (E) in this composition suitably comprises a fibrous reinforcing agent (E.1) and optionally an inorganic filler (E.2), wherein the weight ratio (E.1):(E.2) is in the range of 50:50 - 100:0.

The compositions according to the invention can be prepared by a process, wherein the thermoplastic polymer, the impact modifier, the LDS additive, the halogen free flame retardant and optional reinforcing agent and/or additional ingredients are melt-blended. Part of the materials may be mixed in a melt-mixer, and the rest of the materials may then be added and further melt-mixed until uniform. Melt-blending may be carried out using any appropriate method known to those skilled in the art. Suitable methods may include using a single or twin-screw extruder, blender, kneader, Banbury mixer, molding machine, etc. Twin-screw extrusion is preferred, particularly when the process is used to prepare compositions that contain additives such as flame retardants, and reinforcing agent. The compositions of the present invention may be conveniently formed into a variety of articles using injection molding, rotomolding and other melt-processing techniques.

The present invention also relates a molded article prepared form the thermoplastic polymer composition according to the invention comprising a thermoplastic polymer, a Laser Direct Structuring (LDS) additive, an impact modifier, a halogen free flame retardant and optionally a reinforcing agent and/or further components, as well as an article made by a LDS process and a process for preparing the same.

The composition used in the article can be any composition according to the invention, and any preferred or specific or particular embodiment thereof as described herein above.

More particular, the molded article can be either:
- an article as molded, wherein the thermoplastic composition is capable of being plated after being activated using a laser; or
- a molded article comprising an activated pattern on the molded article, obtained by laser treatment and capable of being plated to form a conductive path after being activated by the laser treatment;
- a molded article comprising a plated metal pattern thereon forming a conductive path obtained by metal plating after activating by the laser treatment.

The articles disclosed in present application can be used in the field of medical, automotive, aerospace applications, and include RF antennas, sensors, connectors and housings for electronic devices, for example housings and frames for notebooks, mobile phones and PC tablets.

The molded articles made of the composition according to a preferred embodiment of the invention and comprising a semi-crystalline semi-aromatic polyamide with a melting temperature of at least 270 °C are in particular useful in SMT applications among others.

The invention is further illustrated with the following examples and comparative experiments.

### Raw Materials

| | |
|---|---|
| PET | Polyethylene terephthalate (standard grade) |
| Glass fibers | standard grade for polyamides, 10 micrometer diameter |
| LDS additive | Cu/CrOx-spinel |
| Flame retardant | Exolit OP1230, aluminum diethyl phosphinate |
| Impact modifier | Lotader AX 8900, Ethylene-acryl type impact modifier |

### Examples

The compositions of Example I and Comparative Example A were prepared by melt-blending with the constituting components on a Werner & Pfleiderer ZE-25 twin screw extruder using a standard temperature profile. The constituents were fed via a hopper, glass fibers were added via a side feed. Throughput was 20 kg/h and screw speed was 200 rpm. The polymer melt was degassed at the end of the extruder. The melt was extruded into strands, cooled and chopped into granules.

### Injection molding of test bars

Dried granulate material was injection molded in a mold to form test bars with a thickness of 4 mm conforming ISO 527 type 1A for tensile testing, ISO 179/1eU for unnotched Charpy testing, ISO 179/1eA for notched Charpy testing and ISO 75 for HDT testing. The test bars were used to measure the mechanical properties of the compositions. All tests were carried out on test bars dry as made. The compositions and main test results have been collected in Table1 1.

### LDS performance

The LDS behavior was tested with a 20W laser, applying different power levels ranging from 40 % to 90 % of the maximum laser power (max 20 W) and different pulsing frequencies (60 kHz, 80 kHz and 100 kHz), with a laser spot size of 40 µm diameter. Plating was done with a standard Ethone Plating bath with Cu only with a plating time of 10 minutes. Representative results are given in Table 1.

**Table 1. Compositions and test results for compositions of Comparative Experiment A (without LDS additive) and Comparative Experiment B (with LDS additive)**

| **Experiment / Composition (wt.%)** | **CE-A** | **EX-I** |
|---|---|---|
| PET | 67 | 66 |
| LDS additive | 7 | 7 |
| Glass Fibers | 15 | 15 |
| Impact modifier | 10 | 10 |
| Flame retardant | | 5 |
| Additive package | 1 | 1 |

| **Tensile Properties** (Dry as molded) | | |
|---|---|---|
| Tensile Modulus (MPa) | 2800 | 3100 |
| Tensile Strength (MPa) | 75 | 72 |
| Elongation at Break (%) | 3 | 3.1 |

| **Impact properties** | | |
|---|---|---|
| Charpy notched (kJ/m²) | 3.6 | 3.5 |
| Charpy unnotched (kJ/m²) | 32 | 30 |
| **Plating at 80 kHz and power level (%)** | | |
| 50 | 45 | 51 |
| 60 | 39 | 49 |
| 70 | 32 | 52 |
| 80 | 9 | 47 |

Table 1 shows moderate mechanical properties despite the presence of impact modifier, indicative for the negative effect of the LDS additive, as well as very poor LDS properties, illustrative for the negative impact of impact modifier on these properties. The presence of flame retardant has some effect on the mechanical properties, so these are pretty well retained upon addition of the flame retardant, while at the same time, the addition has resulted in a strong improvement in the LDS properties.

## Claims

1. Thermoplastic polymer composition comprising
A. a thermoplastic resin;
B. an impact modifier in an amount of 2.5 - 25 wt.%, relative to the total weight of the composition; and
C. a laser direct structuring (LDS) additive;
wherein the thermoplastic resin (A) comprises a thermoplastic polyamide or a thermoplastic polyester, and wherein the thermoplastic polymer composition further comprises
D. a halogen free flame retardant comprising a melamine condensation product, a salt of a polyphosphate and melamine or a melamine condensation product, or a salt of an organic phosphinic acid or diphosphinic acid and a metal, melamine or a melamine condensation product, or any mixture thereof.

2. Polymer composition according to claim 1, wherein the polyamide comprises an aliphatic polyamide or a semi-aromatic polyamide, or a mixture thereof.

3. Polymer composition according to claim 1 or 2, wherein the impact modifier (B) is a polyolefine based polymer, a polyacrylic based polymer, a silicon based polymer or a polystyrene based polymer, or any copolymer thereof, and/or any blend thereof.

4. Polymer composition according to any one of claims 1 - 3, wherein the halogen free flame retardant (D) comprises a salt of an organic phosphinic acid or diphosphinic acid, or a mixture thereof.

5. Polymer composition according to any of claims 1 - 4, wherein the composition comprises a reinforcing agent (component E).

6. Polymer composition according to claim 5, wherein the reinforcing agent (E) comprises an inorganic fibrous reinforcing agent or an inorganic filler, or a combination thereof.

7. Polymer composition according to any one of claims 1 -6, wherein the composition comprises:
(A) 30 - 80 wt.% of thermoplastic resin;
(B) 2.5 - 25 wt.% impact modifier;
(C) 1 - 10 wt.% of LDS additive;
(D) 1 - 15 wt.% of halogen free flame retardant; and
(E) 0 - 60 wt.% of reinforcing agent;
wherein the sum of (A), (B), (C), (D) and (E) is at most 100 wt.%, and wherein the weight percentages (wt.%) are relative to the total weight of the composition.

8. Polymer composition according to any one of claims 1 - 7, wherein the composition comprises one or more further components (F) in an amount of 0.5 - 15 wt.%, relative to the total weight of the composition.

9. Molded article, made from a thermoplastic composition according to any of claims 1-8, wherein the thermoplastic composition is capable of being plated after being activated using a laser.

10. Molded article, made from a thermoplastic composition according to any of claims 1-8, wherein the molded article comprises an activated pattern on the molded article, obtained by laser treatment and capable of being plated to form a conductive path after being activated by the laser treatment.

11. Molded article, made from a thermoplastic composition according to any of claims 1-8, wherein the molded article comprises a plated metal pattern thereon forming a conductive path obtained by metal plating after activating by laser treatment.

12. Article of manufacture comprising a molded article according to claim 11 comprising a plated metal pattern forming a conductive path thereon.

13. Article according to claim 12, being an article selected from the group consisting of RF antennas, sensors, connectors and housings for electronic devices, for example housings and frames for notebooks, mobile phones and PC tablets.

14. Process for producing a molded article made from a thermoplastic composition and comprising a plated metal pattern thereon forming a conductive path, the process comprising the steps of:
- molding a thermoplastic composition according to any of claims 1-8, thereby obtaining a molded article;
- treating the molded art by laser treatment, thereby obtaining an activated pattern on the molded article;
- treating the molded article comprising the activated pattern thereon by an electroless metal plating process, thereby obtaining a molded article comprising a plated metal pattern thereon.

## Patentansprüche

1. Thermoplastische Polymerzusammensetzung, umfassend
A. ein thermoplastisches Harz;
B. einen Schlagzähigkeitsmodifikator in einer Menge von 2,5-25 Gew.-%, bezogen auf das Gesamtgewicht der Zusammensetzung; und
C. ein Laserdirektstrukturierungsadditiv (LDS-Additiv);
wobei das thermoplastische Harz (A) ein thermoplastisches Polyamid oder einen thermoplastischen Polyester umfasst und wobei die thermoplastische Polymerzusammensetzung ferner
D. ein halogenfreies Flammschutzmittel, umfassend ein Melaminkondensationsprodukt, ein Salz von einem Polyphosphat und Melamin oder einem Melaminkondensationsprodukt oder ein Salz von einer organischen Phosphinsäure oder Diphosphinsäure und einem Metall, Melamin oder einem Melaminkondensationsprodukt oder eine Mischung davon;
umfasst.

2. Polymerzusammensetzung nach Anspruch 1, wobei das Polyamid ein aliphatisches Polyamid oder ein teilaromatisches Polyamid oder eine Mischung davon umfasst.

3. Polymerzusammensetzung nach Anspruch 1 oder 2, wobei es sich bei dem Schlagzähigkeitsmodifikator (B) um ein Polymer auf Polyolefin-Basis, ein Polymer auf Polyacryl-Basis, ein Polymer auf Silicium-Basis oder ein Polymer auf PolystyrolBasis oder ein beliebiges Copolymer davon und/oder einen beliebigen Blend davon handelt.

4. Polymerzusammensetzung nach einem der Ansprüche 1-3, wobei das halogenfreie Flammschutzmittel (D) ein Salz einer organischen Phosphinsäure oder Diphosphinsäure oder eine Mischung davon umfasst.

5. Polymerzusammensetzung nach einem der Ansprüche 1-4, wobei die Zusammensetzung ein Verstärkungsmittel (Komponente E) umfasst.

6. Polymerzusammensetzung nach Anspruch 5, wobei das Verstärkungsmittel (E) ein anorganisches faserförmiges Verstärkungsmittel oder einem anorganischen Füllstoff oder eine Kombination davon umfasst.

7. Polymerzusammensetzung nach einem der Ansprüche 1-6, wobei die Zusammensetzung
(A) 30-80 Gew.-% thermoplastisches Harz;
(B) 2,5 bis 25 Gew.-% Schlagzähigkeitsmodifikator;
(C) 1-10 Gew.-% LDS-Additiv;
(D) 1-15 Gew.-% halogenfreies Flammschutzmittel und
(E) 0-60 Gew.-% Verstärkungsmittel umfasst; wobei die Summe von (A), (B), (C), (D) und (E) höchstens 100 Gew.-% beträgt und wobei sich die Gewichtsprozentangaben (Gew.-%) auf das Gesamtgewicht der Zusammensetzung beziehen.

8. Polymerzusammensetzung nach einem der Ansprüche 1-7, wobei die Zusammensetzung eine oder mehrere weitere Komponenten (F) in einer Menge von 0,5-15 Gew.-%, bezogen auf das Gesamtgewicht der Zusammensetzung, umfasst.

9. Formkörper, hergestellt aus einer thermoplastischen Zusammensetzung nach einem der Ansprüche 1-8, wobei die thermoplastische Zusammensetzung nach Aktivierung mit einem Laser mit einem Metall beschichtbar ist.

10. Formkörper, hergestellt aus einer thermoplastischen Zusammensetzung nach einem der Ansprüche 1-8, wobei der Formkörper ein aktiviertes Muster auf dem Formkörper umfasst, das durch Laserbehandlung erhalten wurde und nach Aktivierung durch die Laserbehandlung unter Bildung eines leitfähigen Pfads mit einem Metall beschichtbar ist.

11. Formkörper, hergestellt aus einer thermoplastischen Zusammensetzung nach einem der Ansprüche 1-8, wobei der Formkörper ein Muster aus abgeschiedenem Metall darauf umfasst, das einen leitfähigen Pfad bildet, der nach Aktivierung durch Laserbehandlung durch Metallabscheidung erhalten wurde.

12. Erzeugnis, umfassend einen Formkörper nach Anspruch 11, der ein Muster aus abgeschiedenem Metall umfasst, das darauf einen leitfähigen Pfad bildet.

13. Erzeugnis nach Anspruch 12, bei dem es sich um ein Erzeugnis aus der Gruppe bestehend aus HF-Antennen, Sensoren, Verbinder und Gehäusen für elektronische Geräte, beispielsweise Gehäuse und Rahmen für Notebooks, Mobiltelefone und PC-Tablets handelt.

14. Verfahren zur Herstellung eines Formkörpers aus einer thermoplastischen Zusammensetzung und mit einem darauf abgeschiedenen Metallmuster, wobei das Verfahren folgende Schritte umfasst:
- Formen einer thermoplastischen Zusammensetzung nach einem der Ansprüche 1-8, wodurch ein Formkörper erhalten wird,
- Behandeln des Formkörpers durch Laserbehandlung, wodurch auf dem Formkörper ein aktiviertes Muster erhalten wird;
- Behandeln des Formkörpers mit dem aktivierten Muster darauf durch ein Verfahren zur stromlosen Metallabscheidung, wodurch ein Formkörper mit einem abgeschiedenen Metallmuster darauf erhalten wird.

## Revendications

1. Composition de polymère thermoplastique comprenant
A. une résine thermoplastique ;
B. un modificateur d'impact en une quantité de 2,5 à 25 % en poids, par rapport au poids total de la composition ; et
C. un additif de structuration directe par laser (SDL) ;
la résine thermoplastique (A) comprenant un polyamide thermoplastique ou un polyester thermoplastique, et la composition de polymère thermoplastique comprenant en outre
D. un retardateur de flamme exempt d'halogène comprenant un produit de condensation de mélamine, un sel d'un polyphosphate et de mélamine ou d'un produit de condensation de mélamine, ou un sel d'un acide phosphinique organique ou d'un acide diphosphinique organique et d'un métal, de mélamine ou d'un produit de condensation de mélamine, ou un quelconque mélange correspondant.

2. Composition de polymère selon la revendication 1, le polyamide comprenant un polyamide aliphatique ou un polyamide semi-aromatique, ou un mélange correspondant.

3. Composition de polymère selon la revendication 1 ou 2, le modificateur d'impact (B) étant un polymère à base de polyoléfine, un polymère à base de polyacrylique, un polymère à base de silicium ou un polymère à base de polystyrène, ou un quelconque copolymère correspondant, et/ou un quelconque mélange correspondant.

4. Composition de polymère selon l'une quelconque des revendications 1 à 3, le retardateur de flamme exempt d'halogène (D) comprenant un sel d'un acide phosphinique organique ou d'un acide diphosphinique organique, ou un mélange correspondant.

5. Composition de polymère selon l'une quelconque des revendications 1 à 4, la composition comprenant un agent de renforcement (composant E).

6. Composition de polymère selon la revendication 5, l'agent de renforcement (E) comprenant un agent de renforcement fibreux inorganique ou une charge inorganique, ou une combinaison correspondante.

7. Composition de polymère selon l'une quelconque des revendications 1 à 6, la composition comprenant :
(A) 30 à 80 % en poids de résine thermoplastique ;
(B) 2,5 à 25 % en poids de modificateur d'impact ;
(C) 1 à 10 % en poids d'additif SDL ;
(D) 1 à 15 % en poids de retardateur de flamme exempt d'halogène ; et
(E) 0 à 60 % en poids d'agent de renforcement ;
la somme de (A), (B), (C), (D) et (E) étant d'au plus 100 % en poids, et les pourcentages en poids (% en poids) étant par rapport au poids total de la composition.

8. Composition de polymère selon l'une quelconque des revendications 1 à 7, la composition comprenant un ou plusieurs composants supplémentaires (F) en une quantité de 0,5 à 15 % en poids, par rapport au poids total de la composition.

9. Article moulé, préparé à partir d'une composition thermoplastique selon l'une quelconque des revendications 1 à 8, la composition thermoplastique étant capable d'être plaquée après avoir été activée à l'aide d'un laser.

10. Article moulé, préparé à partir d'une composition thermoplastique selon l'une quelconque des revendications 1 à 8, l'article moulé comprenant un motif activé sur l'article moulé, obtenu par traitement au laser et capable d'être plaqué pour former un chemin conducteur après avoir été activé par le traitement au laser.

11. Article moulé, préparé à partir d'une composition thermoplastique selon l'une quelconque des revendications 1 à 8, l'article moulé comprenant un motif de métal plaqué sur celui-ci formant un chemin conducteur obtenu par placage métallique après activation par un traitement au laser.

12. Article de fabrication comprenant un article moulé selon la revendication 11 comprenant un motif de métal plaqué formant un chemin conducteur sur celui-ci.

13. Article selon la revendication 12, qui est un article choisi dans le groupe constitué par des antennes RF, des capteurs, des connecteurs et des boîtiers pour des dispositifs électroniques, par exemple des boîtiers et des cadres pour des ordinateurs portables, des téléphones mobiles et des tablettes PC.

14. Procédé pour la production d'un article moulé préparé à partir d'une composition thermoplastique et comprenant un motif de métal plaqué sur celui-ci formant un chemin conducteur, le procédé comprenant les étapes de :
- moulage d'une composition thermoplastique selon l'une quelconque des revendications 1 à 8, ce qui permet d'obtenir un article moulé ;
- traitement de l'article moulé par un traitement au laser, ce qui permet d'obtenir un motif activé sur l'article moulé ;
- traitement de l'article moulé comprenant le motif activé sur celui-ci par un procédé de placage de métal autocatalytique, ce qui permet d'obtenir un article moulé comprenant un motif de métal plaqué sur celui-ci.
